# EUROPÄISCHE PATENTSCHRIFT

(11) **EP 2 701 219 B1**
(45) Veröffentlichungstag und Bekanntmachung des Hinweises auf die Patenterteilung: **24.12.2014**
(21) Anmeldenummer: 13168071.2
(22) Anmeldetag: 16.05.2013
(51) Int. Cl.: H01M 2/10, B60L 11/18, B65D 81/26, H01M 10/42, H01M 10/6567, H01M 10/613, H01M 6/50, H01M 10/615, H01M 10/625

(54) **Energiespeicher**
Energy storage device
Accumulateur d'énergie

(30) Priorität: 23.08.2012 EP 12181567
(43) Veröffentlichungstag der Anmeldung: 26.02.2014
(73) Patentinhaber: MAGNA STEYR Battery Systems GmbH & Co OG, 8141 Zettling (AT)
(72) Erfinder: Dämon, Peter, 8301 Laßnitzhöhe (AT); Roepke, Stefan, 8041 Graz (AT); Steiner, Mario, 8144 Tobelbad (AT); Trathnigg, Thomas, 8010 Graz (AT)
(74) Vertreter: Rausch, Gabriele

(56) Entgegenhaltungen:
- WO-A2-03/103083
- DE-A1-102010 055 614
- JP-A- 2009 193 881
- JP-A- 2010 211 963
- US-A1- 2010 136 402

## Beschreibung

### Gebiet der Erfindung

Die vorliegende Erfindung betrifft einen Energiespeicher umfassend mehrere Batteriezellen und ein Temperiersystem mit einem flüssigen Temperiermittel zur Kühlung und/oder Heizung der Batteriezellen in einem Energiespeichergehäuse.

Energiespeicher mit mehreren Batteriezellen werden insbesondere als Energiespeicher für den Antrieb von Elektro- und Hybridfahrzeugen eingesetzt. Um eine optimale Funktion des Energiespeichers zu gewährleisten ist es notwendig die Temperatur der Batteriezellen in einem gewünschten Betriebsbereich zu halten. Um Überschreitungen und/oder Unterschreitungen der Betriebstemperatur zu verhindern werden aktive oder passive Temperiersysteme eingesetzt. Besonders bewährt hat sich der Einsatz von flüssigem Temperiermittel das gut wärmeleitend, meist in einem Kühlkörper, an den Batteriezellen entlanggeführt wird.

Problematisch ist dabei jedoch, dass es, beispielsweise bei einem Unfall eines derart ausgestatteten Fahrzeuges, zu Leckagen und dadurch zum Austreten des Temperiermittels aus dem Kühlkörper kommen kann. Das Temperiermittel kann dann in direkten Kontakt mit den Batteriezellen gelangen und durch seine Leitfähigkeit einen Kurzschluss auslösen.

Aus der DE 10 2010 055614 A1, der WO 03/103083 A2 und der JP 2010 211 963 A sind bereits Energiespeicher mit Temperiersystemen und saugfähigen Elementen zum Binden von austretendem Temperiermittel bekannt.

### Zusammenfassung der Erfindung

Es ist eine Aufgabe der Erfindung, Energiespeicher der genannten Art in dieser Hinsicht zu verbessern und insbesondere einen Energiespeicher anzugeben, der auch bei Austritt von Temperiermittel aus dem Temperiersystem vor schädlicher Wirkung des Temperiermittels im Energiespeicher geschützt ist.

Die Lösung der Aufgabe erfolgt durch einen Energiespeicher umfassend mehrere Batteriezellen und ein Temperiersystem mit einem flüssigen Temperiermittel zur Kühlung und/oder Heizung der Batteriezellen in einem Energiespeichergehäuse, wobei zwischen den Batteriezellen und dem Energiespeichergehäuse ein saugfähiges Element angeordnet ist, wobei durch das saugfähige Element aus dem Temperiersystem austretendes Temperiermittel bindbar ist, wobei das saugfähige Element von den Batteriezellen durch eine elektrisch isolierende Schicht getrennt ist und wobei die elektrisch isolierende Schicht für das Temperiermittel undurchlässig ist, wobei das saugfähige Element ein Schüttgut ist, wobei am Energiespeichergehäuse zumindest abschnittsweise Aufnahmebereiche ausgebildet sind und das saugfähige Element in den Aufnahmebereichen angeordnet ist, wobei die Aufnahmebereiche als Bereiche zwischen Rippen oder Sicken des Energiespeichergehäuses ausgebildet sind, die gleichzeitig zur Verstärkung des Energiespeichergehäuses dienen.

Erfindungsgemäß ist die Verwendung eines saugfähigen Elementes vorgesehen um austretendes Temperiermittel zu binden. Temperiersysteme verwenden oft größere Mengen an Temperiermittel. Da das saugfähige Element zusammen mit gebundenem Temperiermittel in der Regel eine, zumindest geringe, Leitfägkeit aufweist und durch die eventuell auftretenden Mengen von Temperiermittel die Gefahr des Kontaktes mit Batteriezellen bestünde, ist zwischen dem saugfähigem Element und den Batteriezellen eine Schicht aus elektrisch isolierendem Material vorgesehen. Das elektrisch isolierende Material ist undurchlässig für das Temperiermittel, so dass das Temperiermittel nicht zurück zu den Batteriezellen gelangen kann. Außerhalb der elektrisch isolierenden Schicht kann das Temperiermittel zum saugfähigen Element gelangen.

Bevorzugt sind alle weiteren vorhandenen spannungsführenden Bauteile des Energiespeichers, wie beispielsweise Batteriezellverbinder, Spannungsabgriffe, oder Sicherungen ebenso durch die elektrisch isolierende Schicht von den saugfähigen Elementen getrennt.

Weiterbildungen der Erfindung sind in den abhängigen Ansprüchen, der Beschreibung sowie den beigefügten Zeichnungen angegeben.

Das saugfähige Element ist ein Schüttgut. Hierdurch kann das saugfähige Element in loser Form, beispielsweise als Körner, gut in Vertiefungen, Kanten und Ecken des Energiespeichergehäuses gelangen und auch an diesen Stellen ausgetretenes Temperiermittel absorbieren.

Am Energiespeichergehäuse sind zumindest abschnittsweise Aufnahmebereiche ausgebildet und das saugfähige Element ist in den Aufnahmebereichen angeordnet. Als Aufnahmebereiche werden Bereiche zwischen Rippen oder Sicken verwendet, die gleichzeitig zur Verstärkung des Energiespeichergehäuses dienen können. Bevorzugt befindet sich das saugfähige Element ausschließlich in den Aufnahmebereichen, also beispielsweise zwischen Rippen des Energiespeichergehäuses.

Bevorzugt ist zwischen dem saugfähigen Element und der isolierenden Schicht eine Halteschicht ausgebildet, wobei die Halteschicht für das Temperiermittel durchlässig ist. Insbesondere wenn Schüttgut als saugfähiges Element verwendet wird, kann durch eine derartige Halteschicht zwar das saugfähige Element in dessen Position gehalten werden um zum Beispiel bei einer Schieflage des Energiespeichers das Austreten des Schüttguts aus dessen Aufnahmebereichen zu verhindern. Die Halteschicht kann eine netzartige Struktur aufweisen und beispielsweise aus Nylon bestehen. Die Halteschicht kann beispielswese auf Rippen des Energiespeichergehäuses geklebt sein um zu verhindern dass Schüttgut von einem Aufnahmebereich in einen anderen Aufnahmebereich übertritt.

Bevorzugt ist das saugfähige Element an zumindest zwei verschiedenen Seiten des Energiespeichergehäuses angeordnet. Besonders bevorzugt ist das saugfähige Element, insbesondere mit jeweiligen isolierenden Schichten, zwischen Batteriezellen und Batteriegehäuse an zumindest zwei gegenüberliegenden Seiten des Energiespeichergehäuses angeordnet. So ist die Bindung von austretendem Temperiermittel in verschiedenen Lagen des Energiespeichers und für verschiedene Leckage-Positionen sicher gestellt.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Energiespeichers.
- Fig. 2: ist eine schematische Darstellung einer weiteren Ausführungsform eines Energiespeichers.
- Fig. 3: ist eine schematische Darstellung einer Ausführungsform eines erfindungsgemäßen Energiespeichers.
- Fig. 4: ist eine schematische Darstellung einer weiteren Ausführungsform eines Energiespeichers.
- Fig. 5: ist eine schematische Darstellung einer weiteren Ausführungsform eines erfindungsgemäßen Energiespeichers.

### Detainierte Beschreibung der Erfindung

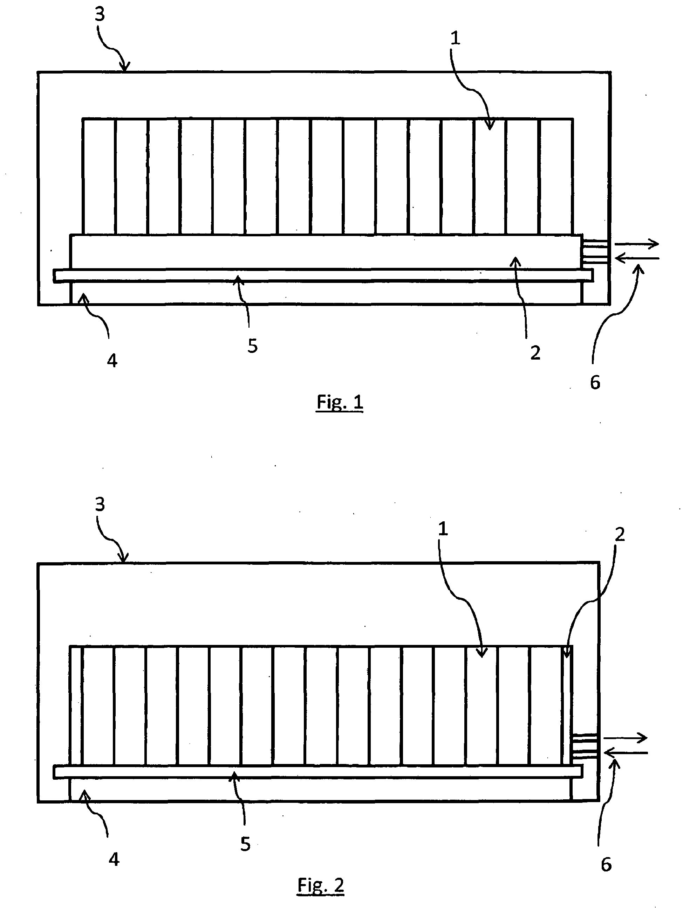

In Fig. 1 ist ein Energiespeicher dargestellt, umfassend mehrere Batteriezellen 1 und ein Temperiersystem 2 mit einem Kühlkörper, der an den Batteriezellen 1 anliegt, und mit einem Zulauf und Ablauf 6 für ein flüssiges Temperiermittel. Das Temperiersystem 2 dient zur Kühlung und/oder zur Erwärmung der Batteriezellen 1. Der Energiespeicher befindet sich mit den Batteriezellen 1 und dem Temperiersystem 2 in einem Energiespeichergehäuse 3, das beispielsweise aus Aluminium besteht.

Zwischen den Batteriezellen 1 und dem Energiespeichergehäuse 3 ist ein saugfähiges Element 4 angeordnet. Durch das saugfähige Element 4 ist aus dem Temperiersystem 2 austretendes Temperiermittel bindbar. Das saugfähige Element 4 kann zum Beispiel ein Absorbermaterial wie zum Beispiel Zeolith sein. Das saugfähige Element 4 ist von den Batteriezellen 1 durch eine elektrisch isolierende Schicht 5 getrennt, die für das Temperiermittel undurchlässig ist. Die elektrisch isolierende Schicht 5 muss nicht notwendigerweise unmittelbar an den Kühlkörper angrenzen. Es kann auch beispielsweise ein Spalt zwischen dem Kühlkörper und der elektrisch isolierenden Schicht 5 bestehen.

Wie in Fig. 2 dargestellt, kann der Kühlkörper des Temperiersystems 2 auch anders angeordnet sein, als die in Fig. 1 dargestellte Lage unterhalb der Batteriezellen 1 und parallel zur elektrisch isolierenden Schicht 5 und zum saugfähigen Element 4. In Fig. 2 befindet sich der Kühlkörper seitlich neben den Batteriezellen 1 und normal auf die elektrisch isolierende Schicht 5 und das saugfähige Element 4.

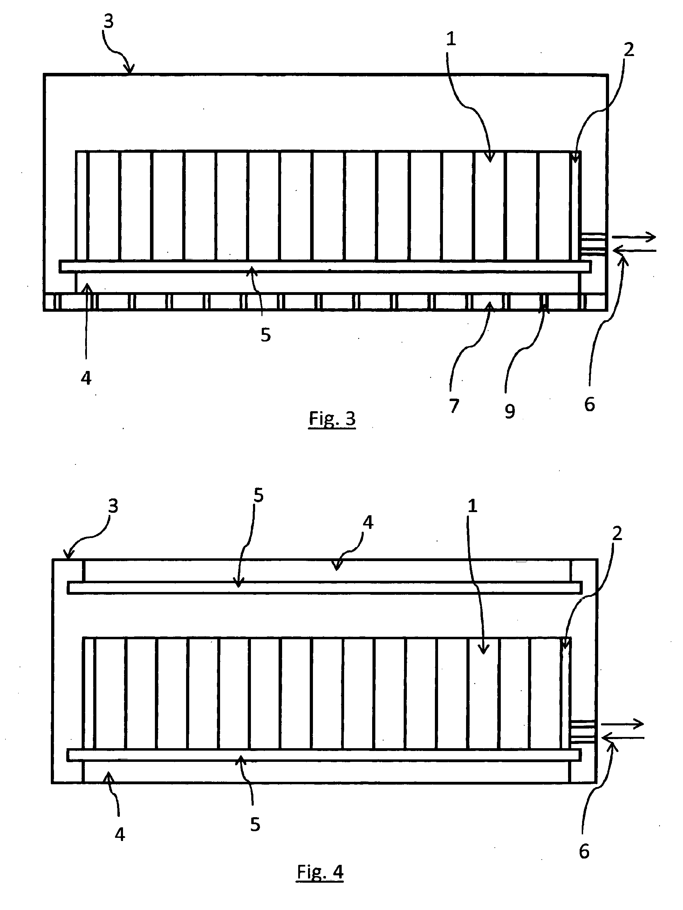

Wie in Fig. 3 dargestellt, ist erfindungsgemäß das Energiespeichergehäuse 3 auch, zum Beispiel abschnittsweise, mit Rippen 9 oder Sicken ausgestattet. Das saugfähige Element 4 kann in Zwischenräume zwischen diesen Rippen 9 oder Sicken gedrückt sein, die somit als Aufnahmebereiche 7 für das saugfähige Element 4 dienen. Dadurch kann auch Temperiermittel das in diese Zwischenräume gelangt gebunden werden.

Die in Fig. 4 dargestellte Ausführungsform zeigt, dass die Anordnung von saugfähigen Elementen 4 und elektrisch isolierenden Schichten 5 auch in mehreren Bereichen des Energiespeichers möglich ist. Beispielsweise können saugfähige Elemente 4 und elektrisch isolierende Schichten 5 an zwei einander gegenüberliegenden Seiten der Batteriezellen 1 angeordnet sein.

Die saugfähigen Elemente 4 werden bevorzugt so platziert, dass austretendes Temperiermittel rasch und sicher gebunden werden kann. Daher werden saugfähige Elemente insbesondere in der Nähe der Schnittstellen des Temperiersystems 2, wie den Zuläufen und Abläufen 6 für das Temperiermittel, angeordnet, an welchen die Wahrscheinlichkeit einer Leckage am größten ist.

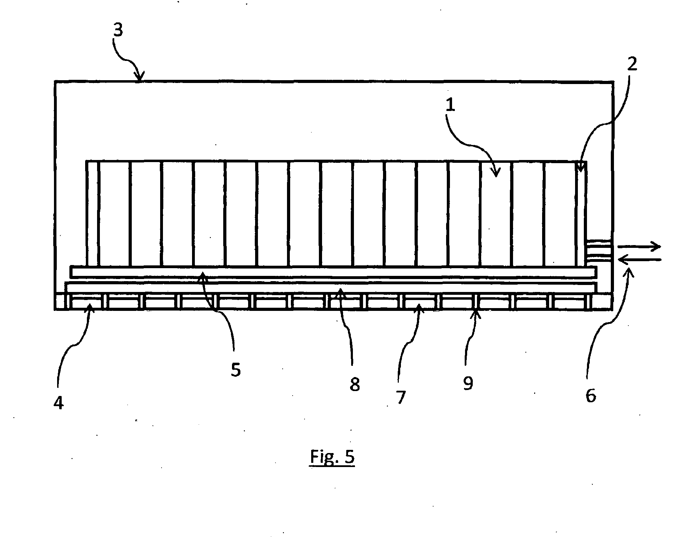

In der erfindungsgemäßen Ausführungsform der Fig. 5 befindet sich das saugfähige Element 4 als Schüttgut, also in loser Form, in den Aufnahmebereichen 7 zwischen den Rippen 9. Um zu verhindern, dass sich das Schüttgut beispielsweise bei einer Schiefstellung des Energiespeichers ungewollt verteilt, ist zwischen dem Schüttgut und der elektrisch isolierenden Schicht eine Halteschicht 8 vorgesehen. Die Halteschicht 8 ist für das Temperiermittel durchlässig, jedoch für das Schüttgut zumindest weitgehend undurchlässig. Die Halteschicht 8 kann eine netzartige Struktur aufweisen und besteht beispielsweise aus Nylon. Die Halteschicht 8 ist beispielsweise auf die den Batteriezellen 1 zugewandten Oberflächen der Rippen 9 des Energiespeichergehäuses aufgeklebt. Zwischen der Halteschicht 8 und der elektrisch isolierenden Schicht 5 ist ein Spalt vorgesehen, wodurch austretendes Temperiermittel leichter zu den saugfähigen Elementen 4 gelangen kann. Der Spalt und das saugfähige Element 4 kann auch so ausgebildet sein, dass der Spalt durch aufquellendes saugfähiges Element 4 geschlossen wird, wenn das saugfähige Element 4 Temperiermittel aufnimmt.

Die Erfindung gibt somit einen Energiespeicher an, der auch bei Austritt von Temperiermittel aus einem Temperiersystem vor schädlicher Wirkung des Temperiermittels im Energiespeicher geschützt ist.

### Bezugszeichenliste

- 1: Batteriezellen
- 2: Temperiersystem
- 3: Energiespeichergehäuse
- 4: saugfähige Element
- 5: elektrisch isolierende Schicht
- 6: Zulauf und Ablauf
- 7: Aufnahmebereich
- 8: Halteschicht
- 9: Rippe

## Patentansprüche

1. Energiespeicher umfassend mehrere Batteriezellen (1) und ein Temperiersystem (2) mit einem flüssigen Temperiermittel zur Kühlung und/oder Heizung der Batteriezellen (1) in einem Energiespeichergehäuse (3), wobei zwischen den Batteriezellen (1) und dem Energiespeichergehäuse (3) ein saugfähiges Element (4) angeordnet ist, wobei durch das saugfähige Element (4) aus dem Temperiersystem (2) austretendes Temperiermittel bindbar ist, wobei das saugfähige Element (4) von den Batteriezellen (1) durch eine elektrisch isolierende Schicht (5) getrennt ist und wobei die elektrisch isolierende Schicht (5) für das Temperiermittel undurchlässig ist,
**dadurch gekennzeichnet, dass** das saugfähige Element ein Schüttgut ist, wobei am Energiespeichergehäuse (3) zumindest abschnittsweise Aufnahmebereiche (7) ausgebildet sind und das saugfähige Element in den Aufnahmebereichen (7) angeordnet ist, wobei die Aufnahmebereiche (7) als Bereiche zwischen Rippen (9) oder Sicken des Energiespeichergehäuses (3) ausgebildet sind, die gleichzeitig zur Verstärkung des Energiespeichergehäuses dienen.

2. Energiespeicher nach Anspruch 1,
**dadurch gekennzeichnet, dass** zwischen dem saugfähigen Element und der isolierenden Schicht eine Halteschicht (8) ausgebildet ist, wobei die Halteschicht für das Temperiermittel durchlässig ist.

3. Energiespeicher nach zumindest einem der vorhergehenden Ansprüche,
**dadurch gekennzeichnet, dass** das saugfähige Element an zumindest zwei verschiedenen Seiten des Energiespeichergehäuses angeordnet ist.

## Claims

1. Energy storage device comprising a plurality of battery cells (1) and a temperature-control system (2) with a liquid temperature-control medium for cooling and/or heating the battery cells (1) in an energy storage device housing (3), an absorbent element (4) being arranged between the battery cells (1) and the energy storage device housing (3), any temperature-control medium escaping from the temperature-control system (2) being absorbable by the absorbent element (4), the absorbent element (4) being separated from the battery cells (1) by an electrically insulating layer (5), and the electrically insulating layer (5) being impermeable to the temperature-control medium,
**characterized in that** the absorbent element is a bulk material, receiving regions (7) being formed at least over some portions on the energy storage device housing (3) and the absorbent element being arranged in the receiving regions (7), the receiving regions (7) being formed as regions between ribs (9) or corrugations of the energy storage device housing (3) which simultaneously serve to strengthen the energy storage device housing.

2. Energy storage device according to Claim 1,
**characterized in that** a retaining layer (8) is formed between the absorbent element and the insulating layer, the retaining layer being permeable to the temperature-control medium.

3. Energy storage device according to at least one of the preceding claims,
**characterized in that** the absorbent element is arranged on at least two different sides of the energy storage device housing.

## Revendications

1. Accumulateur d'énergie comportant plusieurs cellules de batterie (1) et un système de thermorégulation (2) comprenant un agent de thermorégulation liquide pour le refroidissement et/ou le chauffage des cellules de batterie (1) dans un boîtier d'accumulateur d'énergie (3), un élément absorbant (4) étant disposé entre les cellules de batterie (1) et le boîtier d'accumulateur d'énergie (3), l'agent de thermorégulation s'échappant du système de thermorégulation (2) pouvant être absorbé par l'élément absorbant (4), l'élément absorbant (4) étant séparé des cellules de batterie (1) par une couche électriquement isolante (5), et la couche électriquement isolante (5) étant imperméable à l'agent de thermorégulation,
**caractérisé en ce que** l'élément absorbant est un produit en vrac, des régions de réception (7) étant réalisées au moins par sections sur le boîtier d'accumulateur d'énergie (3) et l'élément absorbant étant disposé dans les régions de réception (7), les régions de réception (7) étant réalisées sous forme de régions entre des nervures (9) ou des moulures du boîtier d'accumulateur d'énergie (3), lesquelles servent en même temps à renforcer le boîtier d'accumulateur d'énergie.

2. Accumulateur d'énergie selon la revendication 1,
**caractérisé en ce qu'**une couche de retenue (8) est réalisée entre l'élément absorbant et la couche isolante, la couche de retenue étant perméable à l'agent de thermorégulation.

3. Accumulateur d'énergie selon au moins l'une quelconque des revendications précédentes,
**caractérisé en ce que** l'élément absorbant est disposé sur au moins deux côtés différents du boîtier d'accumulateur d'énergie.
